Europäisches Patentamt

**European Patent Office**

**Office européen des brevets**

(19)

(11) Veröffentlichungsnummer: **0 143 935**
**B1**

(12) EUROPÄISCHE PATENTSCHRIFT

(45) Veröffentlichungstag der Patentschrift:
16.08.89

(51) Int. Cl.⁴: **C 08 F 220/18**, C 08 F 220/06,
C 08 F 265/06, C 08 J 5/18

(21) Anmeldenummer: **84111508.2**

(22) Anmeldetag: **27.09.84**

(54) Thermoplastisches Polymerisat und Gegenstände aus einem thermoplastischen Polymerisat.

(30) Priorität: **04.10.83 DE 3335954**

(43) Veröffentlichungstag der Anmeldung:
**12.06.85 Patentblatt 85/24**

(45) Bekanntmachung des Hinweises auf die Patenterteilung:
**16.08.89 Patentblatt 89/33**

(84) Benannte Vertragsstaaten:
**AT BE CH DE FR GB IT LI LU NL SE**

(56) Entgegenhaltungen:
EP-A-0 071 239
AT-B-309 085
AU-B-410 709
DE-A-2 806 862

(73) Patentinhaber: **RB Kunststoffpatent-Verwertungs AG,**
Westbahnhofstrasse 11, CH-4500 Solothurn (CH)
Patentinhaber: **BELLAND AG, Sandmattstrasse 2,**
**CH-4500 Solothurn (CH)**

(72) Erfinder: **Delbig, Heinrich, Dr., Priessnitzstrasse 13,**
**D-6000 Frankfurt/M. 90 (DE)**
Erfinder: **Belz, Roland Karl, Sonnenhalde 31,**
**D-7022 Leinfelden-Echterdingen (DE)**

(74) Vertreter: **Patentanwälte Ruff und Beier,**
**Neckarstrasse 50, D-7000 Stuttgart 1 (DE)**

**Beschreibung**

In der europäischen Offenlegungsschrift 32 244 ist eine Verbundfolie beschrieben, bei der eine Schicht aus einem in Wasser nicht löslichen aber in saurem oder basischem wäßrigen Medium lösbaren Material besteht. Bei dem Material handelt es sich vorzugsweise um ein Copolymerisat einer ungesättigten organischen Carbonsäure mit einem neutralen Monomeren. Es sind dort auch verschiedene Beispiele für die einzelnen Monomere aufgeführt.

In der EP-A-0 071 239 sind alkoholische oder neutralisierte wäßrige Lösungen eines Polymerisats von Acrylsäure mit einem Acrylat beschrieben. Über die mechanischen Eigenschaften dieses Polymerisats ist nichts erwähnt.

Ähnliches gilt für die AT-B-309 085. Ein dort beschriebenes Copolymerisat A aus Methylacrylat, Acrylsäure und Butandioldimethacrylat wird nach seiner Herstellung nicht isoliert. Vielmehr wird in der Emulsion des Copolymerisats A ein Copolymerisat B hergestellt, das bei höheren Temperaturen vernetzt, was dort auch gewünscht ist.

In der australischen Veröffentlichung AU-B-410 709 ist ein Terpolymer als Emulsionspolymerisat beschrieben, das aus 40 Gew.-Teilen Acrylat, nämlich 2-Äthylhexylacrylat, 20 Gew.-Teilen Methacrylsäure und 40 Gew.-Teilen Methylmethacrylat zusammengesetzt ist. Das Methylmethacrylat stellt das Termonomere dar. Es ist in einem Mol-Verhältnis von mehr als 1 Mol Methylmethacrylat pro Mol Methacrylsäure vorhanden. Das Emulsionspolymerisat wird zu einem Beschichtungsmaterial auf wäßriger Basis weiterverarbeitet.

Der Erfindung liegt die Aufgabe zugrunde, ein in alkalisch wäßrigen Medien auflösbares Polymerisat in Substanz zu schaffen, das gute mechanische Eigenschaften besitzt.

Es wurde nunmehr gefunden, daß ein thermoplastisches Polymerisat aus 2,5 bis 6 Mol von mindestens einem Acrylat pro Mol Acrylsäure und/oder Methacrylsäure, 0 bis 0,5 Mol eines Termonomeren sowie üblichen Polymerisationszusätzen in der Form eines Granulats, einer Folie, eines Tiefziehteils, Spritzgußteils, Preßteils oder Blasteils besonders gute Eigenschaften besitzt und zwar insbesondere in Bezug auf Elastizität, Festigkeit und definiertes Auflösungsvermögen in alkalischem Medium. Das Acrylat ist vorzugsweise ein Ester mit einem Alkohol mit 1 bis 18 C-Atomen, insbesondere Methacrylat oder Ethylacrylat. Das Polymer kann ein Copolymer oder ein Terpolymer sein und hierbei eignet sich als Termonomeres besonders ein Monomer der Gruppe Vinyläther mit 3 bis 18 C-Atomen insbesondere Vinylisobutyläther, aromatische Vinylkohlenwasserstoffe mit 8 bis 11 C-Atomen, insbesondere Styrol, Acrylat bzw. Methacrylat mit einem Alkoholrest mit 1 bis 18 C-Atomen insbesondere n-Butylacrylat, Butylmethacrylat und Stearylmethacrylat. Das Mol-Verhältnis von Acrylat zur organischen Säure liegt sowohl bei den Copolymeren als auch bei den Terpolymeren vorzugsweise bei 3:1 bis 5:1, insbesondere 4:1. Bei den Terpolymeren liegt das Verhältnis von organischer Säure zu den Termonomeren vorzugsweise bei 1:0,1 bis 1:0,4, insbesondere 1:0,2 bis 1:0,3.

Ein für die Polymerisation verwendeter Initiator kann in Mengen 0,5 bis 25 mMol pro Mol Monomer-Gesamtgemisch eingesetzt werden. Durch Variation der Menge kann das Molekulargewicht des Polymers gesteuert werden. In der Regel werden 1 bis 10 mMol, insbesondere ca. 6 mMol pro Mol Gesamt-Monomere eingesetzt.

Die Herstellung der Polymerisate kann in üblicher Weise erfolgen. Vorzugsweise werden sie jedoch in mindestens einem Extruder hergestellt. Hierbei werden die Monomere einzeln oder im Gemisch an der Eingangsstelle eines Extruders, insbesondere eines dichtkämmenden Zweischneckenextruders zugeführt und unter Erwärmung und ggf. Kühlung der einzelnen Zonen des Extruders polymerisiert. Dabei können mehrere Extruder kaskadenartig hintereinander geschaltet sein. Es ist auch möglich, überschüssige Monomere an einzelnen Stellen des Extruders bei Normaldruck abzudestillieren oder im Vakuum abzuziehen. Ein geeignetes Verfahren ist in der deutschen Patentanmeldung DE-A-3 335 954.7 vom 4. Oktober 1983 und der entsprechenden europäischen Patentanmeldung 84 109 569.8 vom 10. August 1984 beschrieben, auf die hier Bezug genommen wird.

Der Carboxylgruppengehalt der Polymere liegt vorzugsweise zwischen 5 und 15%, insbesondere zwischen 7 und 13%. Dabei hat sich gezeigt, daß der am Produkt gemessene Carboxylgehalt der Polymere bei der Herstellung im Extruder in der Regel etwas höher ist als der theoretische. Dies ist darauf zurückzuführen, daß in der Regel ein Teil des neutralen Monomers dampfförmig abgezogen wird.

Besonders bevorzugte Terpolymere erhält man aus Ethylacrylat, Methacrylsäure und Vinylisobutyläther.

Die erfindungsgemäßen Polymerisate sind vielseitig einsetzbar, sie können in Form eines Granulats gelagert oder zu Folien verarbeitet werden, was vorzugsweise direkt aus der bei der Polymerisation erhaltenen Schmelze vorgenommen wird. Die Polymerisate lassen sich auch durch übliche Verfahren formen, wie durch Tiefziehen, Spritzgießen und Pressen.

Bei einer weiteren Ausführungsform der Erfindung liegt das Polymerisat in Form einer Folie vor, die in Wasser schrumpfbar ist. Die Folie kann in üblicher Weise durch Extrudieren oder im Blasverfahren hergestellt sein, wobei sie in mindestens einer Richtung gedehnt wird und dabei ein Rückstellvermögen erhält. Es wurde nun überraschenderweise gefunden, daß die Folie nicht nur bei Erwärmung schrumpft, sondern aufgrund ihrer begrenzt hydrophilen Eigenschaften eine bestimmte Menge an Wasser aufzunehmen vermag, die die Rückstellung bewirkt. Dabei erfolgt die Rückstellung bei vorzugsweise in einer Richtung gedehnten Folien unter gleichzeitiger Dickenvermehrung und -verbreiterung in der anderen Richtung. Das Rückstellvermögen im Wasser kann über die Hälfte betragen unter gleichzeitiger Streckung in Querrichtung im Bereich von 30 bis 60%.

Diese Eigenschaft ist überraschend und bietet vielseitige Anwendungsmöglichkeiten.

Es ist auch möglich, die Schrumpfeigenschaften der Polymere bei anderen Körpern als Folien auszunutzen. So können die Polymere auch in Form von Stäben, Fäden, Geweben und Gewirken eingesetzt werden und dabei ihre Schrumpfeigenschaften ausgenützt werden.

Die Erfindung betrifft auch Kunststoffgegenstände, insbesondere dünnwandige Gegenstände aus Kunststoff, z.B. Folien und Platten, die mindestens teilweise aus dem thermoplastischen Polymerisat bestehen, das in neutralem wäßrigem Medium unlöslich aber in nicht neutralem, insbesondere basischem Medium löslich ist, und bei denen dieses Polymerisat mindestens an einzelnen Stellen der Gegenstände beidseitig an der Oberfläche liegt.

Während bei der bekannten Verbundfolie das in Wasser unlösliche aber in basischem Medium lösliche Material stets im Verbund vollflächig mit einem wasserlöslichen Material verbunden war und das wasserlösliche Material den mechanischen Halt der Verbundfolie bietet, wurde nunmehr gefunden, daß das in Wasser an sich unlösliche, in saurem oder basischem Medium aber lösliche Polymerisat zu selbständigen Gegenständen verarbeitbar ist, so zu Spritzgußkörpern, Tiefziehteilen und anderen Gegenständen, wie sie beispielsweise aus der Schmelze, insbesondere durch Extrudieren, Gießen oder Blasen, vorzugsweise porenfrei hergestellt werden können. Dabei erstreckt sich das in saurem oder basischem Medium lösliche Material vorzugsweise an den einzelnen Stellen über die gesamte Dicke des Gegenstandes. Diese Dicke bzw. Wandstärke des Gegenstandes beträgt in der Regel 5 µm bis 2 mm. In besonderen Fällen kann sie auch größer sein. In der Regel liegt sie bei ca. 40 bis 500 µm, insbesondere 40 bis 120 µm, zumindest soweit es sich um Folien und dünne Tiefziehteile handelt. Größere Wandstärken können dann vorkommen, wenn die Auflösungszeit entsprechend lang sein kann.

Die erfindungsgemäßen Gegenstände haben den Vorteil, daß sie als solche gegenüber neutralem Wasser unlöslich sind. Sie können dann durch einen externen Lösungsvermittler, z.B. eine alkalisch wäßrige Lösung, insbesondere eine verdünnte Ammoniaklösung aufgelöst werden. Dies trifft insbesondere für solche Artikel zu, die vollständig aus dem thermoplastischen Polymerisat bestehen, das in neutralem wäßrigen Medium unlöslich, aber im basischen Medium löslich ist.

Auf der anderen Seite ist es aber auch möglich, die erfindungsgemäßen Gegenstände aus verschiedenen Materialien zusammenzusetzen, wobei zwei Möglichkeiten bevorzugt sind. Bei der einen Möglichkeit können sich nebeneinander, insbesondere im wesentlichen in einer Schicht, Stellen aus im wäßrigen Medium unlöslichen Materialien, z.B. normale Thermoplasten, mit Stellen aus solchen Thermoplasten abwechseln, die in sauren oder basischen Medien löslich sind.

Nach dem Auflösen der lösbaren Stellen bleiben dann lediglich die unlösbaren Stellen übrig. Dies ist für viele Anwendungszwecke von besonderem Vorteil, insbesondere wenn die Folie als Klebefolie eingesetzt wird und die Klebeschicht nachträglich porös bzw. durchlässig gemacht werden soll. Dabei können die verschiedenen Materialien streifenförmig nebeneinander liegen, so daß nach dem Auflösen nur noch die Streifen des unlösbaren Materials verbleiben. Es ist auch möglich, das unlösbare Material in kontinuierlicher Flächenausdehnung vorzusehen, wobei das lösbare Material einzelne Stellen einnimmt, so daß nach dem Auflösen des lösbaren Materials ein Gitter, eine Lochfolie oder dgl. erhalten wird. Umgekehrt ist es auch möglich, das lösliche Material als kontinuierliche Flächenausdehnung vorzusehen und das unlösliche Material als diskontinuierliche, so daß nach Auflösen des lösbaren Materials in saurem oder basischem Medium nur noch einzelne Stellen des nichtlösbaren Materials verbleiben.

In ähnlicher Weise können sich nebeneinander Stellen aus an sich in Wasser unlöslichem aber in alkalisch bzw. saurem Medium lösbarem Material abwechseln mit Stellen aus in neutralem Wasser löslichem Material, so daß bereits mit neutralem Wasser eine teilweise Auflösung des Gegenstandes möglich ist. Es ist auch ein Nebeneinander von im wäßrigem Medium unlöslichen Materialien, in basischem Medium lösbarem Material und wasserlöslichem Material möglich, so daß hier verschiedene Stufen der Lösbarkeit nebeneinander vorliegen. Dabei kann der Gegenstand wiederum einschichtig ausgebildet sein und die einzelnen Materialien nebeneinander in der Schicht liegen. Es ist aber auch möglich, daß sich die einzelnen Materialien gegenseitig an den Grenzlinien überlappen, insbesondere dann, wenn sie durch gegenseitiges Verschweißen miteinander verbunden sind.

Weiterhin ist es erfindungsgemäß möglich, daß Teilflächen des in saurem oder basischem Medium löslichen Materials des erfindungsgemäßen Gegenstandes mit mindestens einer Schicht belegt sind, die in Wasser desintegrierbar ist und einen basischen oder sauren Lösungsvermittler enthält oder selbst basisch oder sauer wirkt. Hierbei kann die Schicht lediglich Wasser absorbieren und dabei sauer oder basisch reagieren. Sie kann sich auch in Wasser erweichen oder auflösen. Dabei ist es auch möglich, durch entsprechende Formulierung dieser Schicht die Zeitdauer zu steuern, innerhalb der das Wasser die desintegrierbare Schicht zu durchdringen vermag und dann bis zur an sich in Wasser unlöslichen Schicht dringt. Da sich neben den Teilflächen des beschichteten Materials Flächen aus nichtbeschichteten Material befinden, die an sich in Wasser unlöslich, in saurem oder basischem Medium jedoch löslich sind, können sich je nach Basizität bzw. Säurewirkung der Beschichtung unterschiedliche Ergebnisse einstellen. Bei stark basisch oder sauren Beschichtungen kann die Basizität bzw. die Säurekapazität ausreichen um auch die angrenzenden nicht beschichteten Teile des an sich in Wasser nicht löslichen Materials mitaufzulösen. Wenn der Säuregrad bzw. die Basizität entsprechend schwächer eingestellt werden, lösen sich im wesentlichen nur die Stellen auf, die unmittelbar beschichtet sind, so daß auch hier wieder durch entsprechende Verteilung der lösend wirkenden Schicht zahlreiche neue Gestaltungsmöglichkeiten gegeben sind.

Das in Wasser an sich unlösliche in basischem Medium aber lösbare Material besteht vorzugsweise aus den eingangs genannten Copolymeren bzw. Terpolymeren.

Für die erfindungsgemäßen Gegenstände ergeben sich zahlreiche neue Verwendungsmöglichkeiten, insbesondere dann, wenn sie in Form von Folien vorliegen. So kann die Folie als Schutzfolie verwendet werden, die durch einen externen Lösungsvermittler aufgelöst werden kann, wenn sie nicht mehr gebraucht wird. Dies ist beispielsweise der Fall bei Schutzfolien für Metalloberflächen, bei Agrarfolien. Weiterhin eignet sich die Folie auch als Schutzüberzug für Neuwagen. Hier kann beispielsweise auch von den Schrumpfeigenschaften der Folie Gebrauch gemacht werden. Weiterhin kann die Folie als Verpackungsfolie verwendet werden oder als Trennfolie, wenn bestimmte Substanzen nur vorübergehend getrennt voneinander aufbewahrt werden sollen. Die erfindungsgemäßen Gegenstände können auch in Form von topfartigen Tiefziehteilen, z.B. als Pflanzentöpfe Verwendung finden, die dann im Erdreich nach einer bestimmten Zeit aufgelöst werden. Auch kann die Folie als Sperrfolie beim plastischen Formen bei aushärtbaren Kunststoffmassen, insbesondere Schäumen, nach dem Tiefziehverfahren verwendet und nach Gebrauch mindestens teilweise durch Auflösen entfernt werden.

Beispiel 1

In einem auf 20 °C gekühlten doppelwandigen Rührbehälter wurden 300 Mol (30 kg) Ethylacrylat, 100 Mol (8,6 kg) Methacrylsäure, 25 Mol (67 kg) Tridecylmethacrylat und 0,5 kg Azodiisobutyronitril gelöst um die Flüssigkeit mit einer Rate von 10 kg pro Stunde in die Einfüllzone eines gleichsinnig drehenden dichtkämmenden Zweischneckenextruders von 60 mm Durchmesser und 2580 mm Länge eingepumpt. Der Extruder, der im folgenden als Reaktor bezeichnet wird, hatte 10 heiz- und kühlbare Zonen; die Einfüllzone besass eine Temperatur von 60 °C, die Zonen 2 bis 6 waren auf 110 °C, die Zonen 7 und 8 auf 170 °C und die Zonen 9 und 10 auf 130 °C temperiert. Die Zone 8 besaß einen Aufsatz zur Abdestillation von nicht polymerisierten Monomeren. Bei einer Reaktordrehzahl von 50 U pro Minute und einer Stromaufnahme von 30 A wurden pro Stunde ca. 0,8 kg Flüssigkeit abdestilliert.

Das in dem Reaktor enthaltene Polymerisat wurde unmittelbar über eine Schmelzeleitung in einem zweiten gleichsinnig drehenden dichtkämmenden Zweischneckenextruder von 30 mm Durchmesser und 1300 mm Länge gefördert. Dieser Extruder wird im folgenden als Compounder bezeichnet. Der Compounder hatte 4 heiz- und kühlbare Zonen; die Zonen 1 und 2 (vom Reaktor her betrachtet) waren auf 130 °C temperiert, Zone 3 besass eine Temperatur von 150 °C, Zone 4 (der Extruderkopf) war auf 120 °C temperiert. Zone 3 besass eine Vakuumeinrichtung zur Entfernung von Restmonomeren. Das Polymerisat verliess den Compounder in Form von Strängen, die auf einer Kühlwalze abgekühlt und in einem Granulator granuliert wurden. Das Granulat besass einen analytisch bestimmten Carboxylgruppengehalt von 5,1% (theoretisch 4,3%). Das Polymerisat kann aber auch direkt zu einer Folie extrudiert werden.

Das Granulat wurde in einem weiteren Extruder bei 140–150 °C wieder aufgeschmolzen

a) und mittels einer Breitschlitzdüse zu einer transparenten Folie von ca. 20 cm Breite und 50 μ Dicke verarbeitet.

Das Granulat wurde weiterhin

b) in einem Compounderextruder wiederaufgeschmolzen und mittels einer Blasvorrichtung zur transparenten Folie von ca. 50 cm bis 5 m Breite und 50 μ Dicke verarbeitet.

Beispiel 2

In einem auf 20 °C gekühlten doppelwandigen Rührbehälter wurden 400 Mol (40 kg) Ethylacrylat, 100 Mol (8,6 kg) Methacrylsäure, 25 Mol (2,5 kg) Vinylisobuthylether und 0,55 kg Azodiisobutyronitril gelöst und die Flüssigkeit mit einer Rate von 14 kg/h in die Einfüllzone des Reaktors gegeben. Die weitere Verarbeitung erfolgt gemäß Beispiel 1.

Bei einer Reaktordrehzahl von 20 U pro Minute und einer Stromaufnahme von 28 A wurden pro Stunde 1,1 kg Flüssigkeit abdestilliert.

Schmelzindex: 11,9 g/10 min bei 150 °C
Carboxylgruppengehalt: 10,8% (theoretisch 8,8%)

Beispiel 3

In einem auf 20 °C gekühlten doppelwandigen Rührbehälter wurden 420 Mol (42 kg) Ethylacrylat, 100 Mol (8,6 kg) Methacrylsäure, 25 Mol (2,5 kg) Vinylisobutylether, 1,5 kg Stearylalkohol und 0,55 kg Azodiisobutyronitril gelöst und die Flüssigkeit mit einer Rate von 14 kg/h im Reaktor wie in Beispiel 1 polymerisiert.

Bei einer Reaktordrehzahl von 20 U pro Minute und einer Stromaufnahme von 25 A wurden pro Stunde 1,5 kg Flüssigkeit abdestilliert.

Schmelzindex: 25,6 g/10 min bei 150 °C
Carboxylgruppengehalt: 8,9% (theoretisch 8,5%)

Folien aus Material 3 waren hydrophober als Folien aus Material 2.

Beispiel 4

In einem auf 20 °C gekühlten doppelwandigen Rührbehälter wurden 400 Mol (40 kg) Ethylacrylat, 100 Mol (8,6 kg) Metycrylsäure, 30 Mol (3,8 kg) Butylacrylat und 0,52 kg Azodiisobutyronitril gelöst und die Flüssigkeit mit einer Rate von 12 kg/h wie in Beispiel 1 verarbeitet.

Bei einer Reaktordrehzahl von 30 U pro Minute und einer Stromaufnahme von 22 A wurden pro Stunde 1,2 kg Flüssigkeit abdestilliert.

Schmelzindex: 17,7 g/10 min bei 150 °C
Carboxylgruppengehalt: 9,4% (theoretisch 8,7%)

Folien aus Material 4 sind leicht klebrig.

Eigenschaften von Methacrylsäure-Copolymeren

| Bspl. | a) Rezept (Mole, wenn nichts anderes angegeben) | b) Schmelzindex | c) Carboxylgehalt | | d) Reiss- festigkeit | Reiss- dehng. | Dichte |
|---|---|---|---|---|---|---|---|
| | | | theor. | gem. | | | |
| | | g/10 min/°C | 0/0 | 0/0 | N/mm² | 0/0 | g/cm³ |
| 5 | 3 EA × 1MAS | 8,8/150 °C | 11,6 | 12,4 | 12,0 | 100 | 1,16 |
| 6 | 3 EA × 1MAS 0,25 VIBE | 8,7/150 °C | 10,9 | 11,4 | 13,7 | 120 | 1,14 |
| 7 | 3 EA × 1MAS 0,25 VIBE × 3 0/0 STA | 11,2/150 °C | 10,6 | 11,5 | 13,8 | 80 | 1,14 |
| 8 | 3 EA × 1MAS 0,25 BA | 11,4/150 °C | 10,8 | 11,3 | 9,7 | 100 | 1,15 |
| 9 | 4 EA × 1MAS | 8,4/150 °C | 9,2 | 10,4 | 10,9 | 75 | 1,15 |
| 2 | 4 EA × 1MAS 0,25 VIBE | 11,9/150 °C | 8,8 | 10,8 | 10,2 | 200 | 1,15 |
| 10 | 4 EA × 1MAS 0,25 VIBE × 3 0/0 STA | >20/150 °C 4,0/120 °C | 8,5 | 11,6 | 10,2 | 320 | 1,14 |
| 11 | 4 EA × 1MAS 0,25 BA | 17,7/150 °C 1,5/120 °C | 8,7 | 10,7 | 7,1 | 280 | 1,14 |
| 12 | 4 EA × 1AS 0,19 Styrol | 7,3/130 °C | 9,1 | 11,4 | 3,1 | 720 | 1,13 |
| 13 | 5 EA × 1MAS | >20/150 °C 2,1/120 °C | 7,7 | 8,8 | 5,9 | 140 | 1,14 |
| 14 | 5 EA × 1MAS 0,25 VIBE | 19,4/150 °C 1,9/120 °C | 7,4 | 8,5 | 5,9 | 100 | 1,13 |
| 15 | 5 EA × 1MAS 0,25 VIBE × 3 0/0 STA | >20/150 °C 2,7/120 °C | 7,1 | 8,4 | 6,4 | 110 | 1,13 |
| 16 | 5 EA × 1MAS 0,25 BA | >20/150 °C 2,3/120 °C | 7,3 | 8,2 | 5,9 | 300 | 1,13 |

a) Jeweils mit 6m Mol Azo-bis-(isobutyronitril)/Mol Monomere polymerisiert.
    EA = Ethylacrylat, MAS = Methacrylsäure, VIBE = Vinyl-iso-butylether STA = Stearylalkohol,
    AS = Acrylsäure, BA = n-Butylacrylat
b) Schmelzindex nach Din 53 735
c) g COOH in 100 g Polymer, gemessen durch Titration
d) geprüft mit Pressfolien ca. 100 μm dick nach Din 53 455, Prüfgeschwindigkeit 100 mm/Min.

Beispiel 17

Schrumpfversuche in Wasser mit extrudierten Folien.

Unter Verwendung eines Polymeren aus 4 Mol Ethylacrylat pro Mol Methacrylsäure und 0,25 Mol Vinylisobutyläther (Beispiel 2) wurden extrudierte Folien hergestellt und zwar als (2) Flachfolie sowie als
(1) Blasfolie (zusammengelegter Schlauch)

Es wurden Proben von 10 cm (längs der Abzugsrichtung) × 15 cm (quer) aus verschiedenen Folien zugeschnitten. Danach wurden die Proben 30 Minuten bei 25 °C in Wasser gelagert, abtrocknen gelassen und gemessen.

| Folie Nr. | | Dicke vorher | nachher | Änderung längs | quer |
|---|---|---|---|---|---|
| a) | (1) | ~50 μ | ~110 μ | −67 0/0 | +32,7 0/0 |
| b) | (1) | ~45 μ | ~130 μ | −67 0/0 | +26,7 0/0 |
| c) | (2) | ~45 μ | ~110 μ | −72 0/0 | +50 0/0 |
| d) | (2) | 30–35 μ | 80–90 μ | −76 0/0 | +60 0/0 |
| e) | (2) | ~25 μ | ~60 μ | −79 0/0 | +50 0/0 |
| f) | (2) | 75–80 μ | ~180 μ | −62 0/0 | +33,3 0/0 |
| g) | (2) | ~40 μ | ~110 μ | −67 0/0 | +40,7 0/0 |

Eine Folie aus 4 Mol Ethylacrylat pro Mol Acrylsäure und 0,19 Mol Styrol (vgl. Beispiel 12) zeigte ebenfalls einen Wasserschrumpf und zwar −53% längs und +10% quer.

Beispiel 18

In einem auf 20°C gekühlten doppelwandigen Rührbehälter wurden 400 Mol (40 kg) Äthylacrylat, 100 Mol (8,6 kg) Methacrylsäure, 730 g (1,5%) Dilauroylperoxid und 120 g (0,25%) Tetradecylmercaptan gelöst und in einen Zwischenbehälter überführt, die homogene Lösung wurde aus dem Zwischenbehälter mit einer Rate von 16 kg pro Stunde in die Einfüllzone eines gleichsinnig drehenden, dichtkämmenden Zweischneckenextruders von 60 mm Durchmesser und 2580 mm Länge eingepumpt. Der Extruder hatte 10 Zonen, die erfindungsgemäß heiz- bzw. kühlbar waren. Die Einfüllzone war auf 20°C gekühlt, die Zonen 2 bis 4 hatten eine Temperatur von 100°C, Zone 5: 110°C, Zone 6: 120°C. Zone 8 besaß einen Aufsatz zur Abdestillation von nicht polymerisierten Monomeren, sie hatte eine Temperatur von 160°C. Die Zonen 9 und 10 waren auf 145°C temperiert.

Bei einer Schneckendrehzahl von 50 pro Minute und einer Stromaufnahme von 40 A wurden ca. 0,6 kg Flüssigkeit pro Stunde abdestilliert (ca. 96% Rohumsatz). Das Polymerisat wurde in fünf Strängen vom Extruderkopf abgezogen, auf Kühlwalzen abgekühlt und granuliert. Das Granulat wurde in einem zweiten Extruder bei 160°C im Vakuum von 1 torr entgast, gleichzeitig wurden 5% Stearinsäure eincompoundiert, die Polymerschmelze wurde bei 145°C mittels einer Breitschlitzdüse zu einer Folie extrudiert. Sie kann auch unmittelbar auf eine 100 µm dicke Folie aus Hydroxypropylcellulose (Klucel® H von Herkules), welche 20% Soda enthält und aus einer vorgeschalteten Abwickelstation abgezogen wird, aufkaschiert werden. Die Dicke der Beschichtung beträgt 30µm.

Die so erhaltene Verbundfolie ist bei Kontakt mit Wasser von der Beschichtungsseite her wasserbeständig, bei Kontakt mit Wasser von der Hydroxypropylcellulose-Seite her löst sich die Gesamtfolie völlig auf. Wird die Folie aus dem Äthylacrylat-Methacrylsäure-Copolymerisat nur an einzelnen Stellen oder streifenförmig mit dem den Lösungsvermittler enthaltenden Material belegt, dann werden in Wasser im wesentlichen nur die belegten Stellen gelöst.

Beispiel 19

In einem auf 20°C gekühlten doppelwandigen Rührbehälter wurden 400 Mol (40 kg) Äthylacrylat, 100 Mol (8,6 kg) Methacrylsäure, 730 g (1,5%) Dilauroylperoxid und 120 g (0,25%) Tetradecylmercaptan gelöst und in einen Zwischenbehälter überführt. Die homogene Lösung wurde aus dem Zwischenbehälter mit einer Rate von 16 kg pro Stunde in die Einfüllzone eines gleichsinnig drehenden, dichtkämmenden Zweischneckenextruders von 60 mm Durchmesser und 2580 mm Länge eingepumpt. Der Extruder hatte 10 Zonen, die erfindungsgemäß heiz- bzw. kühlbar waren. Die Einfüllzone war auf 20°C gekühlt, die Zonen 2 bis 8 hatten eine Temperatur von 105°C, die Zonen 9 und 10 waren auf 145°C temperiert. Der Kopf des Reaktionsextruders war über eine temperierbare Schmelzenleitung unmittelbar mit einem zweiten Extruder verbunden (Kaskadenschaltung).

Die erste Zone des zweiten Extruders besaß einen Aufsatz zur Abdestillation von nicht polymerisierten Monomeren. Sie hatte eine Temperatur von 160°C. Bei einer Schneckendrehzahl von 50 pro Minute und einer Stromaufnahme von 40 A im ersten Extruder (Reaktionsextruder) wurden aus dem Destillationsaufsatz des zweiten Extruders (Entgasungs- und Compoundierextruders) 0,15 kg Flüssigkeit pro Stunde abdestilliert (ca. 99% Rohumsatz). In den Zonen 2 bis 4 des Compoundierextruders wurde die Polymerschmelze bei 160°C im Vakuum von 1 torr entgast. In den Zonen 5 bis 7 wurden bei 145°C 5% Stearinsäure eingemischt, danach wurde die stearinsäurehaltige Polymerschmelze aus Zone 8 bei 145°C aus einer Breitschlitzdüse, wie im Beispiel 1 beschrieben, auf den sodahaltigen Hydroxypropylcellulosefilm aufgebracht.

Die Eigenschaften der Gesamtfolie waren ähnlich wie in Beispiel 1.

Die Polymerschmelze kann auch zu einem Granulat verarbeitet oder zu einer einschichtigen Folie verarbeitet werden.

Beispiel 20

In einem auf 20°C gekühlten doppelwandigen Rührbehälter wurden 100 Mol (8,6 kg) Vinylpropyläther, 300 Mol (47,2 kg) Dimethylaminoäthylmethacrylat, 280 g (0,5%) Azoisobuttersäurenitril und 112 g (0,2%) β-Nitrostyrol gelöst und in einen Zwischenbehälter überführt. Die homogene Lösung wurde aus dem Zwischenbehälter mit einer Rate von 32 kg pro Stunde in die Einfüllzone eines gleichsinnig drehenden, dichtkämmenden Zweischneckenextruders von 60 mm Durchmesser und 2580 mm Länge eingepumpt. Der Extruder hatte 10 Zonen, die erfindungsgemäß heiz- und kühlbar waren. Die Einfüllzone war auf 20°C gekühlt, die Zonen 2 bis 8 hatten eine Temperatur von 120°C, die Zonen 9 und 10 waren auf 145°C temperiert. Der Kopf des Reaktionsextruders war über eine temperierbare Schmelzenleitung unmittelbar mit einem zweiten Extruder verbunden (Kaskadenschaltung).

Die erste Zone des zweiten Extruders besaß einen Aufsatz zum Abdestillieren von nicht polymerisierten Monomeren, sie hatte eine Temperatur von 170°C. Bei einer Schneckendrehzahl von 75 pro Minute und einer Stromaufnahme von 30 A im ersten Extruder (Reaktionsextruder) wurden aus dem Destillationsaufsatz des zweiten Extruders (Entgasungs- und Compoundierextruders) im Durchschnitt 2,5 kg Flüssigkeit pro Stunde abgezogen (Rohumsatz ca. 92%). In den Zonen 2 bis 4 des Compoundierextruders wurde die Polymerschmelze bei 170°C im Vakuum von 1 torr entgast. In den Zonen 5 bis 7 wurden bei 145°C 20% 2-Amino-2-methyl-1,3-propandiol (Ammediol, AMPD) eincompoundiert. Danach wurde die AMPD-haltige Polymerschmelze aus Zone 8 bei 145°C in den ersten Kanal einer Zweikanal-Breitschlitzdüse geführt. In den zweiten Kanal dieser Breitschlitzdüse wurde die im Beispiel 2 beschriebene, aus Zone 8 austretende stearinsäurehaltige Polymerschmelze eingeführt und durch Coextrusion eine Verbundfolie hergestellt.

Der Verbundfilm war insgesamt ca. 150 μm dick. Die stearinsäurehaltige Seite des Filmes (Äthylacrylat-methacrylsäurecopolymerisat) war ca. 50 μm dick, sie war wasserbeständig. Die AMPD-haltige Seite des Verbundfilmes (Dimethylaminoäthylmethacrylat-vinylpropyläther-copolymerisat) war ca. 100 μm dick, bei Kontakt mit Wasser von dieser Seite her löste sich der Gesamtfilm völlig auf.

Die Herstellung der thermoplastischen Kunststoffe und ggf. auch deren Verarbeitung kann mit Hilfe eines oder mehrerer Extruder kontinuierlich erfolgen, indem die Ausgangsprodukte bzw. deren Mischung dem Extruder kontinuierlich zudosiert werden. Nach Arbeitsunterbrechungen reicht ein gesteuertes Aufheizen aus, um die im Extruder verfestigten Produkte zu schmelzen, so daß die Produktion fortgesetzt werden kann.

Die mit den Polymeren nach dem Beispiel 1–16 hergestellten Folien und sonstige Gegenstände sind gegen hartes und weiches Wasser sowie gegen Regenwasser sehr beständig. Bringt man die Folie jedoch mit einer wäßrigen Basenlösung in Kontakt, so löst sie sich schnell auf. Als Basen sind beispielsweise geeignet: Ammoniak, Natriumcarbonat, Natriumbicarbonat, Natriummetasilikat, Triammoniumphosphat u.v.a. Im Falle des Ammoniak kann die Folie auch zunächst mit gasförmigem Ammoniak behandelt werden; die Auflösung erfolgt dann bei Kontakt mit neutralem Wasser. Auch Natronlauge kann verwendet werden.

Die Eigenschaft der Wasserunlöslichkeit und der Basenlöslichkeit macht die Folie sehr geeignet für den Einsatz als temporäre Schutz- oder Abdeckfolie sowie als intermediäre Folie in Verarbeitungsprozessen.

Einsatzmöglichkeiten
Temporäre Autoverpackung
Vor dem Transport vom Autowerk zum Großhändler werden die Autos mit einem Schutzwachs überzogen, beim Großhändler müssen die Wagen wieder entwachst werden, beide Vorgänge sind zeitaufwendig und umweltbelastend.

Die beschriebene Folie mit einer Breite von 2 bis 5 m kann beim Autohersteller auf die Wagen aufgeschrumpft werden, beim Großhändler kann sie durch Übergiessen mit 0,5 Gewichtsprozent Ammoniaklösung + Netzmittel sehr leicht wieder entfernt werden, beispielsweise in einer Waschanlage.

Übersee-Verpackung
Korrosionsgefährdete Metallteile werden vor dem Übersee-Transport zum Schutz gegen die salzhaltige Atmosphäre mit einer Wachsschicht überzogen, die nach dem Transport wieder entfernt werden muß. Auch in diesem Fall kann durch Umhüllen der Teile mit der beschriebenen Folie und später durch Behandeln mit Ammoniaklösung der Korrosionsschutz sehr leicht erzeugt und wieder entfernt werden.

Schutz von Hochglanzflächen
Hochglanzflächen (z.B. polierte Metallteile, Gläser) werden zum Schutz vor Kratzern mit Folien überzogen. Die Schutzfolien lassen sich teilweise nur durch Kratzen entfernen, d.h. bei Entfernen der Schutzfolie kann die Hochglanzoberfläche beschädigt werden. durch Beschichten mit der beschriebenen Folie und Behandlung mit Ammoniaklösung kann dieser Nachteil vermieden werden.

Landwirtschaftfolie
Hochwertige Kulturen werden zeitweilig gegen Vogelfraß, Feuchtigkeitsverluste, Wärmeverluste, Winderosion u.a. mittels Folien geschützt. Die Entfernung dieser Folien ist umständlich und zeitaufwendig. Die erfindungsgemäße Folie kann durch Besprühen mit verdünnter Ammoniaklösung aufgelöst werden, wobei die Lösung eine düngende und bodenverbessernde Wirkung hat, anstelle der Ammoniaklösung kann auch eine nitrathaltige Triammoniumphosphatlösung verwendet werden.

Krankenhauswäsche-Verpackung
Verschmutzte Wäsche wird in Säcken verpackt und muß vor dem Waschen in unhygienischer Weise wieder aus den Säcken entfernt werden. Säcke aus der beschriebenen Folie können direkt in die Waschmaschinen gegeben werden, sie werden durch die Waschflotte aufgelöst.

Tierfutter – Portionsverpackungen
Hunde-, Katzen- und Fischfutter kann in Beuteln aus der beschriebenen Folie portionsgerecht verpackt werden, wobei der Beutel die zum Auflösen der Folie erforderliche Menge an geeignetem Lösungsvermittler, wie Natriumcarbonat oder Soda enthält. Bei Gebrauch wird der Beutel aufgerissen und in der Futterschüssel mit Wasser übergossen; hierbei löst sich die Folie auf, und das Futter wird in hygienischer Weise zugänglich. Fischfutterpackungen können direkt in das Aquarium gegeben werden.

Technische Intermediärfolie
Bei der Herstellung von Autositzpolstern wird in einem Tiefziehvorgang zunächst ein elastischer Schaumkörper aufgeschäumt; der Schaumkörper ist mit einer für das Tiefziehen benötigten Folie fest verbunden. Diese Folie wirkt später als Schweißbarriere, da sie zwischen der textilen Sitzbespannung und dem Schaumkörper liegt, und verhindert so einen behaglichen Sitzkomfort. Das Trennen der Tiefziehfolie vom eigentlichen Schaumkörper würde einen arbeitsaufwendigen Arbeitsprozeß zur Folge haben.

Als Tiefziehfolie kann nun die erfindungsgemäße Folie verwendet werden, wobei Flächenbezirke dieser Folie aus einem ammoniakunlöslichen Thermoplasten bestehen können, welcher eine Verbindung zwischen dem eigentlichen Schaumkörper und der textilen Sitzbespannung herstellt.

Wenn der so gefertigte Autositz mit Ammoniakwasser behandelt wird, verschwinden die ammoniaklöslichen Teile der Tiefziehfolie; wodurch eine gute Diffusion von Wasserdampf ermöglicht wird.

Es ist auch möglich, den fertigen Autositz bei ca. 100°C mit gasförmigem Ammoniak zu behandeln; hierbei versproden durch die Ammoniumsalzbildung Teile der Tiefziehfolie, zerbröseln und ermöglichen die Wasserdampf-Diffusion.

## Partielle Auflösung der Folie

Die beschriebene Folie kann mit einem Muster, bestehend aus einer festen Base, versehen werden. Das Muster kann aus Punkten, Strichen, Streifen und runden oder eckigen Flächen bestehen.

Zur Herstellung des Musters kann eine schmelzbare Base wie z.B. Glycinamid, (Fp. 66°C), Guanidin (Fp. 50°C) aufgeschmolzen werden. Hierbei muß der Schmelzpunkt der Base unter dem Schmelzpunkt der Folie liegen. Es ist auch möglich, eine bei Temperaturen < 200°C nicht schmelzbare Base wie z.B. Soda, Natriummetasilikat oder Ätznatron mit einer niedrigschmelzenden wasserlöslichen Verbindung wie z.B. Acetamid (Fp. 81°C) innig zu vermischen und auf die Folie aufzuschmelzen.

Es ist auch möglich, die bisher aufgeführten Basen mit einem wasserlöslichen, jedoch nicht schmelzbaren Polymeren wie z.B. Methylcellulose, Natriumcarboxymethylcellulose, Hydroxyethylcellulose, Polyvinylalkohol oder Polyvinylpyrrolidon sowie geringen Mengen eines Lösungsmittels innig zu vermischen und das Gemisch auf die Folie aufzudrucken.

Kommt eine auf die beschriebene Art präparierte Folie in Kontakt mit Wasser, so lösen sich die mit Base bedeckten Teile der Folie auf und es entsteht ein vorgebbares Muster.

## Patentansprüche für die Vertragsstaaten: BE, CH, DE, FR, GB, IT, LI, LU, NL, SE

1. Thermoplastisches Polymerisat aus 2,5 bis 6 Mol von mindestens einem Acrylat pro Mol Acrylsäure und/oder Methacrylsäure, 0 bis 0,5 Mol eines Termonomeren sowie üblichen Polymerisationszusätzen, in Form eines Granulats, einer Folie, eines Tiefziehteils, Spritzgußteils, Preß- oder Blasteils.

2. Polymerisat nach Anspruch 1, dadurch gekennzeichnet, daß das Acrylat ein Ester von Acrylsäure mit einem Alkohol mit 1 bis 18 C-Atomen, insbesondere Methylacrylat oder Ethylacrylat ist.

3. Polymerisat nach Anspruch 1 oder 2, dadurch gekennzeichnet, daß das Termonomere ein Monomer der Gruppe Vinyläther mit 3 bis 18 C-Atomen insbesondere Vinylisobutyläther, aromatische Vinylkohlenwasserstoffe mit 8 bis 11 C-Atomen, insbesondere Styrol, Acrylat bzw. Methacrylat mit einem Alkoholrest mit 1 bis 18 C-Atomen insbesondere n-Butylacrylat, Butylmethacrylat und Stearylmethacrylat, ist.

4. Polymerisat nach einem der vorhergehenden Ansprüche, dadurch gekennzeichnet, daß das Mol-Verhältnis von Acrylat zu Säure bei 3:1 bis 5:1, insbesondere 4:1 liegt.

5. Polymerisat nach einem der vorhergehenden Ansprüche, dadurch gekennzeichnet, daß das Verhältnis von Säure zu Terpolymer bei 1:0,1 bis 1:0,4, insbesondere 1:0,2 bis 1:0,3 liegt.

6. Polymerisat nach einem der vorhergehenden Ansprüche in Form einer in mindestens einer Richtung gereckten thermoplastischen Folie, welche hydrophile Eigenschaften besitzt und in Wasser schrumpffähig ist.

7. Polymerisat nach einem der vorhergehenden Ansprüche in Form eines Gegenstandes aus Kunststoff, insbesondere in Form eines dünnwandigen Gegenstandes, dadurch gekennzeichnet, daß der Gegenstand mindestens teilweise aus dem thermoplastischen Polymerisat besteht, das in neutralem wäßrigem Medium unlöslich aber basischem Medium löslich ist, und dieses Polymerisat mindestens an einzelnen Stellen des Gegenstandes beidseitig an der Oberfläche liegt.

8. Gegenstand nach Anspruch 7, dadurch gekennzeichnet, daß er aus der Schmelze des thermoplastischen Polymerisats, insbesondere durch Extrudieren, Gießen oder Blasen, vorzugsweise porenfrei, hergestellt ist.

9. Gegenstand nach Anspruch 7 oder 8, dadurch gekennzeichnet, daß er durch plastische Verformung, insbesondere Tiefziehen, hergestellt ist.

10. Gegenstand nach einem der Ansprüche 7 bis 9, dadurch gekennzeichnet, daß das in basischem Medium lösliche Polymerisat sich an den einzelnen Stellen über die gesamte Dicke des Gegenstandes erstreckt.

11. Gegenstand nach einem der Ansprüche 7 bis 10, dadurch gekennzeichnet, daß er eine Wandstärke von 5 μm bis 2 mm, vorzugsweise 40 μm bis 500 μm besitzt.

12. Gegenstand nach einem der Ansprüche 7 bis 11, dadurch gekennzeichnet, daß er vollständig aus dem thermoplastischen Polymerisat besteht, das in neutralem wäßrigem Medium unlöslich ist aber in basischem Medium löslich ist.

13. Gegenstand nach einem der Ansprüche 7 bis 12, dadurch gekennzeichnet, daß er einschichtig ausgebildet ist.

14. Gegenstand nach einem der Ansprüche 7 bis 13, dadurch gekennzeichnet, daß sich nebeneinander, insbesondere im wesentlichen in einer Schicht, Stellen aus in wäßrigem Medium unlöslichen Materialien, vorzugsweise normalen Thermoplasten, mit Stellen aus dem thermoplastischen Polymerisat abwechseln, das in basischen Medien löslich ist.

15. Gegenstand nach Anspruch 14, dadurch gekennzeichnet, daß die Stellen aus dem Thermoplast einer Art kontinuierlich miteinander verbunden sind.

16. Gegenstand nach einem der Ansprüche 7 bis 15, dadurch gekennzeichnet, daß Teilflächen des in basischem Medium löslichen Polymerisats mit mindestens einer Schicht belegt sind, die in Wasser desintegrierbar, vorzugsweise löslich ist, und einen basischen Lösungsvermittler enthält oder selbst basisch ist.

17. Verwendung des Polymerisats nach einem der Ansprüche 1 bis 6, oder des Gegenstandes nach einem der Ansprüche 7 bis 16 als auflösbarer Schutz, insbesondere in Form einer Folie.

18. Polymerisat nach einem der Ansprüche 1 bis 6, dadurch gekennzeichnet, daß es durch Polymerisation seiner Monomere in mindestens einem Extruder hergestellt ist und vorzugsweise aus der bei der Polymerisation erhaltenen Schmelze geformt ist.

**Patentansprüche für den Vertragsstaat: AT**

1. Verfahren zur Herstellung eines Granulats, einer Folie, eines Tiefziehteils, Spritzgußteils, Preß- oder Blasteils, dadurch gekennzeichnet, daß es aus einem thermoplastischen Polymerisat aus 2,5 bis 6 Mol von mindestens einem Acrylat pro Mol Acrylsäure und/oder Methacrylsäure, 0 bis 0,5 Mol eines Termonomeren sowie üblichen Polymerisationszusätzen geformt wird.

2. Verfahren nach Anspruch 1, dadurch gekennzeichnet, daß ein Polymerisat verwendet wird, bei dem das Acrylat ein Ester von Acrylsäure mit einem Alkohol mit 1 bis 18 C-Atomen, insbesondere Methylacrylat oder Ethylacrylat ist.

3. Verfahren nach Anspruch 1 oder 2, dadurch gekennzeichnet, daß ein Polymerisat verwendet wird, bei dem das Termonomere ein Monomer der Gruppe Vinyläther mit 3 bis 18 C-Atomen, insbesondere Vinylisobutyläther, aromatische Vinylkohlenwasserstoffe mit 8 bis 11 C-Atomen, insbesondere Styrol, Acrylat bzw. Methacrylat mit einem Alkoholrest mit 1 bis 18 C-Atomen insbesondere n-Butylacrylat, Butylmethacrylat und Stearylmethacrylat, ist.

4. Verfahren nach einem der vorhergehenden Ansprüche, dadurch gekennzeichnet, daß ein Polymerisat verwendet wird, bei dem das Mol-Verhältnis von Acrylat zu Säure bei 3:1 bis 5:1, insbesondere 4:1 liegt.

5. Verfahren nach einem der vorhergehenden Ansprüche, dadurch gekennzeichnet, daß ein Polymerisat verwendet wird, bei dem das Verhältnis von Säure zu Terpolymer bei 1:0,1 bis 1:0,4, insbesondere 1:0,2 bis 1:0,3 liegt.

6. Verfahren nach einem der vorhergehenden Ansprüche, dadurch gekennzeichnet, daß das Polymerisat in die Form einer in mindestens einer Richtung gereckten thermoplastischen Folie, welche hydrophile Eigenschaften besitzt und in Wasser schrumpffähig ist, gebracht wird.

7. Gegenstand aus Kunststoff, insbesondere dünnwandiger Gegenstand, aus dem Polymerisat nach einem der vorhergehenden Ansprüche, dadurch gekennzeichnet, daß er mindestens teilweise aus dem thermoplastischen Polymerisat besteht, das in neutralem wäßrigem Medium unlöslich aber basischem Medium löslich ist, und dieses Polymerisat mindestens an einzelnen Stellen des Gegenstandes beidseitig an der Oberfläche liegt.

8. Gegenstand nach Anspruch 7, dadurch gekennzeichnet, daß er aus der Schmelze des thermoplastischen Polymerisats, insbesondere durch Extrudieren, Gießen oder Blasen, vorzugsweise porenfrei, hergestellt ist.

9. Gegenstand nach Anspruch 7 oder 8, dadurch gekennzeichnet, daß er durch plastische Verformung, insbesondere Tiefziehen, hergestellt ist.

10. Gegenstand nach einem der Ansprüche 7 bis 9, dadurch gekennzeichnet, daß das in basischem Medium lösliche Polymerisat sich an den einzelnen Stellen über die gesamte Dicke des Gegenstandes erstreckt.

11. Gegenstand nach einem der Ansprüche 7 bis 10, dadurch gekennzeichnet, daß er eine Wandstärke von 5 µm bis 2 mm, vorzugsweise 40 µm bis 500 µm besitzt.

12. Gegenstand nach einem der Ansprüche 7 bis 11, dadurch gekennzeichnet, daß er vollständig aus dem thermoplastischen Polymerisat besteht, das in neutralem wäßrigem Medium unlöslich ist aber in basischem Medium löslich ist.

13. Gegenstand nach einem der Ansprüche 7 bis 12, dadurch gekennzeichnet, daß er einschichtig ausgebildet ist.

14. Gegenstand nach einem der Ansprüche 7 bis 13, dadurch gekennzeichnet, daß sich nebeneinander, insbesondere im wesentlichen in einer Schicht, Stellen aus in wäßrigem Medium unlöslichen Materialien, vorzugsweise normalen Thermoplasten, mit Stellen aus dem thermoplastischen Polymerisat abwechseln, das in basischen Medien löslich ist.

15. Gegenstand nach Anspruch 14, dadurch gekennzeichnet, daß die Stellen aus dem Thermoplast einer Art kontinuierlich miteinander verbunden sind.

16. Gegenstand nach einem der Ansprüche 7 bis 15, dadurch gekennzeichnet, daß Teilflächen des in basischem Medium löslichen Polymerisats mit mindestens einer Schicht belegt sind, die in Wasser desintegrierbar, vorzugsweise löslich ist, und einen basischen Lösungsvermittler enthält oder selbst basisch ist.

17. Verwendung des nach einem der Ansprüche 1 bis 6 hergestellten Polymerisats, oder des Gegenstandes nach einem der Ansprüche 7 bis 16 als auflösbarer Schutz, insbesondere in Form einer Folie.

18. Verfahren nach einem der Ansprüche 1 bis 6, dadurch gekennzeichnet, daß ein Polymerisat verwendet wird, das durch Polymerisation seiner Monomere in mindestens einem Extruder hergestellt ist, und daß das Polymerisat vorzugsweise aus der bei der Polymerisation erhaltenen Schmelze geformt wird.

**Claims for the Contracting States: BE, CH, DE, FR, GB, IT, LI, LU, NL, SE**

1. Thermoplastic polymer formed from 2.5 to 6 mol of at least one acrylate per mol of acrylic acid and/or methacrylic acid, 0 to 0.5 mol of a termonomer as well as conventional polymerization additives, in the form of a granular material, a film, a deep-drawn injection moulded, pressed or blown part.

2. Polymer according to claim 1, characterized in that the acrylate is an ester of acrylic acid with an alcohol with 1 to 18 carbon atoms, particularly methyl acrylate or ethyl acrylate.

3. Polymer according to claims 1 or 2, characterized in that the termonomer is a monomer of the group of vinyl ethers with 3 to 18 carbon atoms, particularly vinyl isobutyl ether, aromatic vinyl hydrocarbons with 8 to 11 carbon atoms, particularly styrene, acrylate or methacrylate with an alcohol residue with 1 to 18 carbon atoms, particularly n-butyl acrylate, butyl methacrylate and stearyl methacrylate.

4. Polymer according to one of the preceding claims, characterized in that the molar ratio of acrylate to acid is 3:1 to 5:1, particularly 4:1.

5. Polymer according to one of the preceding claims, characterized in that the ratio of acid to terpolymer is 1:0.1 to 1:0.4, particularly 1:0.2 to 1:0.3.

6. Polymer in accordance with one of the preceding claims, in the form of a thermoplastic film stretched in at least one direction, the film having hydrophilic characteristics and being shrinkable in water.

7. Polymer according to one of the preceding claims in the form of an article made from plastic, particularly a thin-walled article, characterized in that the article at least partly comprises a thermoplastic polymer, which is insoluble in a neutral aqueous medium, but is soluble in a basic medium and this material engages on both sides of the surface, at least at individual points of the article.

8. Article according to claim 7, characterized in that it is produced from the melt of the thermoplastic polymer, particularly by extrusion, moulding or blowing, preferably in a non-porous manner.

9. Article according to one of the claims 7 or 8, characterized in that it is produced by plastic deformation, particularly deep-drawing.

10. Article according to one of the claims 7 to 9, characterized in that the polymer soluble in basic medium extends at least at individual points extends over the entire thickness of the article.

11. Article according to one of the claims 7 to 10, characterized in that it has a wall thickness of 5 µm to 2 mm, preferably 40 µm to 500 µm.

12. Article according to one of the claims 7 to 11, characterized in that it completely comprises a thermoplastic polymer, which is insoluble in a neutral aqueous medium, but is soluble in basic medium.

13. Article according to claims 7 to 12, characterized in that it is constructed in a single layer form.

14. Article according to one of the claims 7 to 13, characterized in that points of the thermoplastic polymer insoluble in an aqueous medium and preferably normal thermoplastics are juxtaposed particularly essentially in a single coating with points formed from thermoplastics which are soluble in basic media and alternate therewith.

15. Article according to claim 14, characterized in that the points formed from the thermoplastic polymer of one type are continuously interconnected.

16. Article according to one of the claims 7 to 15, characterized in that partial surfaces of the polymer soluble in the basic medium are coated with at least one coating, which is disintegratable and preferably soluble in water and contains a basic solubilizer or is itself basic.

17. Use of the polymer according to one of the Claims 1 to 6, or the article according to one of the Claims 7 to 16 as a dissolvable protection, particularly in the form of a film.

18. Polymer according to one of the claims 1 to 6, characterized in that it is produced by polymerization of its monomer in at least one extruder and is preferably shaped from the melt obtained during polymerization.

## Claims for the Contracting State: AT

1. Process for producing a granular material, a film, a deep-drawn, injection moulded, pressed or blown part, characterized in that it is formed from a thermoplastic polymer of 2.5 to 6 mol of at least 1 acrylate per mol of acrylic acid and/or methacrylic acid, 0 to 0.5 mol of a termonomer and conventional polymerization additives.

2. Process according to claim 1, characterized in that use is made of a polymer, in which the acrylate is an ester of acrylic acid with an alcohol having 1 to 18 C-atoms, particularly methyl acrylate or ethyl acrylate.

3. Process according to claims 1 or 2, characterized in that use is made of a polymer, in which the termonomer is a monomer of the group of vinyl ethers with 3 to 18 C-atoms, particularly vinyl isobutyl ether, aromatic vinyl hydrocarbons with 8 to 11 C-atoms, particularly styrene, acrylate or methacrylate with an alcohol radical having 1 to 18 C-atoms, particularly n-butyl acrylate, butyl methacrylate and stearyl methacrylate.

4. Process according to one of the preceding claims, characterized in that use is made of a polymer, in which the molar ratio of acrylate to acid is 3:1 to 5:1, particularly 4:1.

5. Process according to one of the preceding claims, characterized in that use is made of a polymer, in which the ratio of acid to terpolymer is 1:0.1 to 1:0.4, particularly 1:0.2 to 1:0.3.

6. Process according to one of the preceding claims, characterized in that the polymer is brought into the form of a thermoplastic film stretched in at least one direction, which has hydrophilic properties and which is shrinkable in water.

7. Article made from plastic, particularly a thin-walled article, from the polymer according to one of the preceding claims, characterized in that it at least partly comprises the thermoplastic polymer, which is insoluble in neutral aqueous medium, but soluble in basic medium and said polymer at at least individual points of the article is located on the surface on both sides.

8. Article according to claim 7, characterized in that it is produced from the melt of the thermoplastic polymer, particularly by extrusion, moulding or blowing and preferably non-porous manner.

9. Article according to claim 7 or 8, characterized in that it is produced by plastic shaping, particularly deep-drawing.

10. Article according to one of the claims 7 to 9, characterized in that the polymer soluble in basic medium extends at individual points over the entire thickness of the article.

11. Article according to one of the claims 7 to 10, characterized in that it has a wall thickness of 5 µm to 2 mm, preferably 40 µm to 500 µm.

12. Article according to one of the claims 7 to 11, characterized in that it entirely comprises the thermoplastic polymer, which is insoluble in neutral aqueous medium, but soluble in basic medium.

13. Article according to one of the claims 7 to 12, characterized in that it is constructed in single layer form.

14. Article according to one of the claims 7 to 13, characterized in that points of materials insoluble in an aqueous medium and preferably normal thermoplastics are juxtaposed, particularly essentially in a single coating with points formed from the thermoplastic polymer which is soluble in basic media and alternate therewith.

15. Article according to claim 14, characterized in that the points of one thermoplastic type are continuously interconnected.

16. Article according to one of the claims 7 to 15, characterized in that partial surfaces of the polymer soluble in the basic medium are convered with at least one coating, which is disintegratable and preferably soluble in water and contains a basic solubilizer or is itself basic.

17. Use of the polymer produced according to one of the claims 1 to 6, or the article according to one of the claims 7 to 16 as a dissolvable protection, particularly in the form of a film.

18. Process according to one of the claims 1 to 6, characterized in that use is made of a polymer produced by polymerization of its monomer in at least one extruder and that the polymer is preferably shaped from the melt obtained during polymerization.

**Revendications pour les Etats contractants: BE, CH, DE, FR, GB, IT, Li, LU, NL, SE**

1. Produit thermoplastique de polymérisation à partir de 2,5 à 6 moles d'au moins un acrylate par mole d'acide acrylique et/ou d'acide méthacrylique, 0 à 0,5 mole d'un termonomère, ainsi que des additifs usuels de polymérisation, sous forme d'un granulat, d'une feuille, d'une pièce d'emboutissage profond, d'une pièce moulée par injection, pressée ou soufflée.

2. Produit de polymérisation selon la revendication 1, caractérisé en ce que l'acrylate est un ester d'acide acrylique avec un alcool avec 1 à 18 atomes de carbone, en particulier un acrylate de méthyle ou un acrylate d'éthyle.

3. Produit de polymérisation selon la revendication 1 ou 2, caractérisé en ce que le termonomère est un monomère du groupe des éthers de vinyle avec 3 à 18 atomes de carbone, en particulier un vinylisobutyléther, un hydrocarbure aromatique vinylique avec 8 à 11 atomes de carbone, en particulier le styrène, un acrylate ou un méthacrylate avec un reste alcool avec 1 à 18 atomes de carbone, en particulier un acrylate de n-butyle, un méthacrylate de n-butyle ou un méthacrylate de stéaryle.

4. Produit de polymérisation selon l'une des revendications précédentes, caractérisé en ce que le rapport molaire entre l'acrylate et l'acide est de 3:1 à 5:1, en particulier de 4:1.

5. Produit de polymérisation selon l'une des revendications précédentes, caractérisé en ce que le rapport de l'acide au terpolymère est de 1:0,1 à 1:0,4, en particulier de 1:0,2 à 1:0,3.

6. Produit de polymérisation selon l'une des revendications précédentes, sous forme de feuille thermoplastique étirée dans une direction au moins, possédant des propriétés hydrophiles et étant rétractable dans l'eau.

7. Produit de polymérisation selon l'une des revendications précédentes, sous forme d'objet en matériau synthétique, en particulier sous forme d'objet à paroi mince, caractérisé en ce que l'objet se compose au moins partiellement du polymère thermoplastique qui est insoluble en milieu aqueux neutre mais soluble en milieu basique et que ce polymère se trouve, au moins à certains endroits de l'objet, des deux côtés de la surface.

8. Objet selon la revendication 7, caractérisé en ce qu'il est fabriqué à partir de la masse fondue du polymère thermoplastique, en particulier par extrusion, moulage ou soufflage, de préférence sans pores.

9. Objet selon la revendication 7 ou 8, caractérisé en ce qu'il est fabriqué par déformation plastique, en particulier par emboutissage profond.

10. Objet selon l'une des revendications 7 à 9, caractérisé en ce que le polymère soluble en milieu basique s'étend, aux endroits particuliers, sur toute l'épaisseur de l'objet.

11. Objet selon l'une des revendications 7 à 10, caractérisé en ce qu'il possède une épaisseur de paroi de 5 µm à 2 mm, de préférence de 40 µm à 500 µm.

12. Objet selon l'une des revendications 7 à 11, caractérisé en ce qu'il se compose entièrement du polymère thermoplastique qui est insoluble en milieu aqueux neutre, mais soluble en milieu basique.

13. Objet selon l'une des revendications 7 à 12, caractérisé en ce qu'il est constitué en une couche.

14. Objet selon l'une des revendications 7 à 13, caractérisé en ce que des endroits adjacents, constitués en particulier et en substance d'une couche de matériaux insolubles en milieu aqueux, de préférence des thermoplastes normaux, alternent avec des endroits constitués de polymère thermoplastique soluble en milieux basiques.

15. Objet selon la revendication 14, caractérisé en ce que les endroits en thermoplaste d'une sorte sont liés entre eux de façon continue.

16. Objet selon l'une des revendications 7 à 15, caractérisé en ce que des parties de surface en polymère soluble en milieu basique sont recouvertes d'au moins une couche désintégrable, de préférence soluble, dans l'eau, contenant un agent basique de dissolution ou étant elle-même basique.

17. Utilisation du polymère selon l'une des revendications 1 à 6, ou de l'objet selon l'une des revendications 7 à 16, comme protection soluble, en particulier sous forme d'une feuille.

18. Produit de polymérisation selon l'une des revendications 1 à 6, caractérisé en ce qu'il est fabriqué par polymérisation de ses monomères dans au moins une extrudeuse et est de préférence formé à partir de la masse fondue obtenue à la polymérisation.

**Revendications pour l'Etat contractant: AT**

1. Procédé pour la fabrication d'un granulat, d'une feuille, d'une pièce d'emboutissage profond, d'une pièce moulée par injection, d'une pièce pressée ou soufflée, caractérisé en ce que l'objet façonné est formé au départ d'un produit thermoplastique de polymérisation à partir de 2,5 à 6 moles d'au moins un acrylate par mole d'acide acrylique et/ou d'acide méthacrylique, 0 à 0,5 mole d'un termonomère, ainsi que d'additifs usuels de polymérisation.

2. Procédé selon la revendication 1, caractérisé en ce que l'on utilise un polymère dans lequel l'acrylate est un ester d'acide acrylique avec un alcool comportant 1 à 18 atomes de carbone, en particulier un acrylate de méthyle ou un acrylate d'éthyle.

3. Procédé selon la revendication 1 ou 2, caractérisé en ce que l'on utilise un produit de polymérisation dans lequel le termonomère est un monomère du groupe des éthers vinyliques avec 3 à 18 atomes de carbone, en particulier un vinylisobutyléther, un hydrocarbure aromatique vinylique avec 8 à 11 atomes de carbone, en particulier le styrène, un acrylate ou un méthacrylate avec un reste alcool avec 1 à 18 atomes de carbone, en particulier un acrylate de n-butyle, un méthacrylate de butyle ou un méthacrylate de stéaryle.

4. Procédé selon l'une des revendications précédentes, caractérisé en ce que l'on utilise un produit de polymérisation dans lequel le rapport molaire de l'acrylate à l'acide est de 3:1 à 5:1, en particulier 4:1.

5. Procédé selon l'une des revendications précédentes, caractérisé en ce que l'on utilise un polymère dans lequel le rapport de l'acide au terpolymère est de 1:0,1 à 1:0,4, en particulier de 1:0,2 à 1:0,3.

6. Procédé selon l'une des revendications précédentes, caractérisé en ce que le polymère est mis sous la forme d'une feuille thermoplastique étirée dans au moins une direction, possédant des propriétés hydrophiles et étant rétractable dans l'eau.

7. Objet en matière synthétique, en particulier objet à paroi mince, constitué du produit de polymérisation selon l'une des revendications précédentes et caractérisé en ce qu'il se compose au moins partiellement du polymère thermoplastique qui est insoluble en milieu aqueux neutre mais soluble en milieu basique, et que ce polymère se trouve, au moins à certains endroits, des deux côtés de la surface de l'objet.

8. Objet selon la revendication 7, caractérisé en ce qu'il est fabriqué à partir de la masse fondue de polymère thermoplastique, et ce en particulier par extrusion, moulage ou soufflage, de préférence sans pores.

9. Objet selon la revendication 7 ou 8, caractérisé en ce qu'il est fabriqué par déformation plastique, en particulier par emboutissage profond.

10. Objet selon l'une des revendications 7 à 9, caractérisé en ce que le polymère soluble en milieu basique s'étend en des endroits particuliers sur toute l'épaisseur de l'objet.

11. Objet selon l'une des revendications 7 à 10, caractérisé en ce qu'il possède une épaisseur de paroi de 5 µm à 2 mm, de préférence de 40 µm à 500 µm.

12. Objet selon l'une des revendications 7 à 11, caractérisé en ce qu'il est entièrement constitué du polymère thermoplastique lequel est insoluble en milieu aqueux neutre, mais soluble en milieu basique.

13. Objet selon l'une des revendications 7 à 12, caractérisé en ce qu'il est constitué en une couche.

14. Objet selon l'une des revendications 7 à 13, caractérisé en ce que des endroits adjacents, constitués en particulier et en substance d'une couche de matériaux insolubles en milieu aqueux, de préférence de thermoplastes normaux, alternent avec des endroits constitués de polymère thermoplastique soluble en milieux basiques.

15. Objet selon la revendication 14, caractérisé en ce que les endroits de thermoplaste d'une sorte sont liés entre eux de façon continue.

16. Objet selon l'une des revendications 7 à 15, caractérisé en ce que des parties de surface en polymère soluble en milieu basique sont recouvertes d'au moins une couche qui est désintégrable, de préférence soluble, dans l'eau, contenant un agent basique de dissolution ou étant elle-même basique.

17. Utilisation du polymère selon l'une des revendications 1 à 6, ou de l'objet selon l'une des revendications 7 à 16, comme protection soluble, en particulier sous forme d'une feuille.

18. Procédé selon l'une des revendications 1 à 6, caractérisé en ce qu'on utilise un polymère obtenu par polymérisation de ses monomères dans au moins une extrudeuse et que le polymère est de préférence formé à partir de la masse fondue obtenue à la polymérisation.